# EUROPEAN PATENT SPECIFICATION

(11) **EP 2 236 721 B1**
(45) Date of publication and mention of the grant of the patent: **14.03.2012**
(21) Application number: 10158822.6
(22) Date of filing: 31.03.2010
(51) Int. Cl.: E06B 3/273, B23P 19/00

(54) **Unit, assembly apparatus and method for the pre-assembly of thermal insulation profiles**
Einheit, Montagevorrichtung und Verfahren zur Vormontage von Wärmedämmungsprofilen
Unité, appareil d'assemblage et procédé pour le pre-assemblage de profilés composites isolants

(30) Priority: 02.04.2009 IT MO20090083
(43) Date of publication of application: 06.10.2010
(73) Proprietor: Oemme S.p.A., 44122 Ferrara (IT)
(72) Inventor: Bonetti, Simone, 44123 Ferrara (IT)
(74) Representative: Modiano, Micaela Nadia

(56) References cited:
- EP-A2- 1 884 617
- BE-A4- 1 004 237
- DE-A1- 3 825 144
- DE-C1- 19 506 035
- US-A- 3 624 885
- US-A- 4 697 337

## Description

The present invention relates to a unit for the pre-assembly of thermal insulation profiles according to the preamble of claim 1, to a corresponding assembly apparatus according to the preamble of claim 15 and to a method according to the preamble of claim 16. Examples of such units, apparatuses and methods are known from DE 19506035C1.

Thermal insulation profiles are known which are constituted generally by two profile parts made of aluminum, termed "shells", which are obtained by extrusion and are connected to each other by interposition of elongated partitions, termed "bars", made of thermally insulating material such as polyamide or other plastic material.

Each profile part is provided with at least one longitudinal slot delimited by two mutually opposite ridges, termed "hammers"; the two profile parts are arranged adjacent with the respective slots in facing pairs, so as to form at least one receptacle for a corresponding bar.

Such profiles are widely used in the field of the production of energy-saving windows and doors, in which the two profile parts are arranged so that one faces the inside and one faces the outside of the room in which the window or door is fitted, with the interposition of an air space that acts as a thermal barrier.

It is noted that standardized profile catalogs have various types of profile sections, some of which have substantially flat outer surfaces while others are rather irregular.

The current method for assembling a thermal insulation profile provides for the following working steps:
- knurling of the slots provided on the pair of profile parts to be assembled;
- pre-assembly of the profile by insertion of a bar along each pair of mutually facing slots;
- deformation of the hammers by rolling in order to fasten the bars and thus assemble the profile.

The knurling step consists in performing a machining, with the aid of knurling machines provided with appropriate milling cutters for obtaining a series of incisions inside the slots of the profile parts that improve the resistance to disengagement obtained at the end of assembly.

A first known type of assembly apparatus has two machine tools for providing the knurling which work in parallel on the two profile parts that compose the profile.

Such machines are provided with systems for feeding profile parts being machined, which are constituted by idle rollers; as the section of the profile parts to be machined changes it is possible to replace the rolls, changing their diameter, or adjust their working height.

Downstream of each machine tool a roller bed onto which the machined profile parts are unloaded and a system of conveyor belts that collects the profile parts from such roller bed and sends them to a pick-up station that is accessible to the operators are provided.

The conveyor belt systems are arranged at different heights, one of the two having lifting means for raising the conveyance height of the corresponding profile parts. In the pick-up region, therefore, the two profile parts that must be assembled are available at different heights.

Downstream of the pick-up station there is the profile pre-assembly unit, which is constituted by a worktable on which the operators arrange the two profile parts so that they are superimposed and kept spaced with the aid of appropriate fixtures, so that each pair of slots is face to face, so as to allow the insertion of a corresponding bar. The two profile parts are laterally adjacent to a bar insertion machine for inserting a bar in each receptacle, obtaining the pre-assembly of the profile.

Finally, the apparatus has a rolling machine for the final assembly of the profile; the pre-assembled profile is thus picked up manually by two or more operators from the worktable of the pre-assembly unit and loaded onto the rolling machine for final assembly.

The rolling machine has a supporting system with idle rollers that can be interchanged or have an adjustable height according to the variation of the section of the profile being worked.

This type of apparatus, however, is not without drawbacks, which include the fact that it needs constantly the presence of at least two assigned operators, whose labor affects production costs significantly.

Moreover, the manual movement of the parts, in particular during the transfer of the pre-assembled profile from the worktable of the pre-assembly unit to the rolling machine, is particularly difficult due to their bulks.

Moreover, the arrangement of the profile parts and of the profile so that they rest on the surfaces designed to remain in view during the production of windows and doors risks damaging them with consequent production of working waste.

Moreover, such apparatuses have rather extensive plan layouts, with consequent difficulty in finding suitable sites for their installation.

In order to obviate these drawbacks at least partially, apparatuses are also known which provide for the automatic movement of the profile parts by means of complicated systems for positioning and reference thereof which use supporting outlines.

Such apparatuses, however, are not economically convenient in the case of small production batches, because they require long times for machine setup when the sections of the profiles being worked vary and entail substantial investments for the purchase of the auxiliary supporting equipment, that is specific for the various types of profiles.

Finally, a further type of apparatus is known which consists of a machine provided with two worktables which are mutually superimposed and to which automatic clamps fix the two profile parts, arranged so as to face each other and so that their respective slots are superimposed. Such machine has a carriage which is supported so that it can slide along the profile parts between the two worktables and carries the tools necessary in order to perform the knurling operations, bar insertion and rolling and, in a plurality of passes, performs the full working cycle.

Each profile part is arranged in abutment against the corresponding worktable and is retained on its sides by the automatic clamps.

This positioning, however, does not ensure stability in case of irregular profiles and involves the risk of damaging the visible surface of the profile.

The aim of the present invention is to eliminate the drawbacks noted above of known apparatuses, by devising a unit for the pre-assembly of thermal insulation profiles and a corresponding assembly apparatus that makes it possible to automate the pick-up and movement of the parts being worked, ensuring their stability regardless of the shape of said parts.

Within this aim, an object of the present invention is to allow the working of profile parts having any cross-section, without requiring the execution of complicated machine setup operations.

Another object of the present invention is to reduce the use of labor so as to contain working costs.

Another object of the present invention is to avoid damage of the surfaces that are intended to be arranged in view in the use of the profile for providing windows and doors, reducing the production of working waste.

A further object of the present invention is to provide an apparatus that has a limited space occupation and is therefore easy to install.

Another object of the present invention is to provide an apparatus which is simple, relatively easy to provide, safe to use, effective in operation and of relatively low cost.

This aim and these and other objects which will become better apparent hereinafter are achieved by a unit according to claim 1, an assembly apparatus according to claim 15 and a method according to claim 16.

The pre-assembly unit according to the invention comprises at least one first entry region and one second entry region, respectively, of said first and second profile parts arranged in respective entry configurations and first and second means for the movement, respectively, of said first and second grip means from respective grip positions at the entry region of the corresponding profile part to respective release positions at the working region.

This aim and these objects are all achieved, moreover, by an apparatus for assembling thermal insulation profiles according to claim 15.

Further characteristics and advantages of the present invention will become better apparent from the following detailed description of a preferred but not exclusive embodiment of an apparatus for the assembly of thermal insulation profiles that comprises the pre-assembly unit according to the invention, illustrated by way of non-limiting example in the accompanying drawings, wherein:
Figure 1 is a schematic perspective view of a traditional thermal insulation profile worked in the apparatus according to the invention;

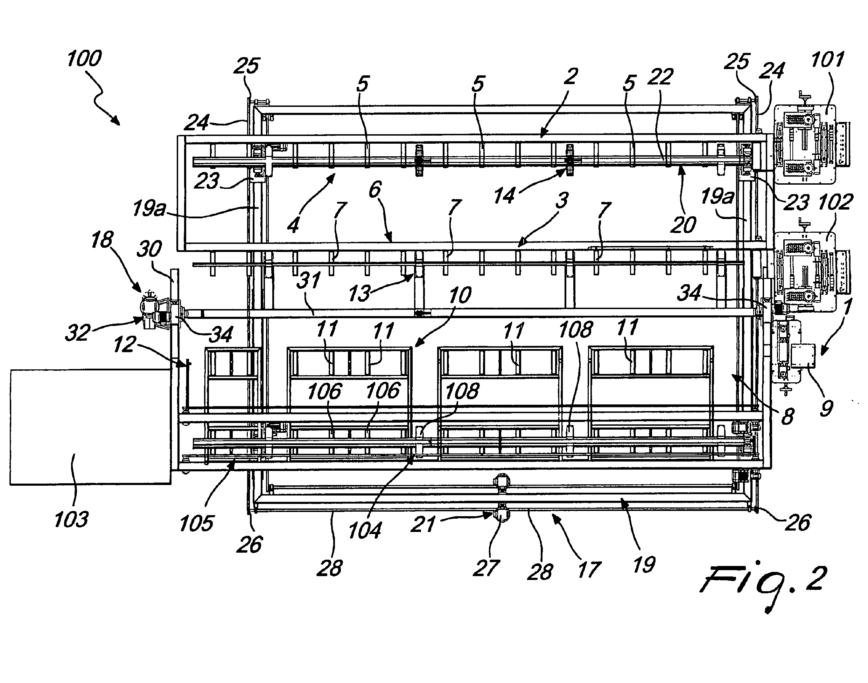

Figure 2 is a schematic plan view of an assembly apparatus according to the invention;
Figure 3 is a schematic front elevation view of the apparatus of Figure 2 in a first step of operation;
Figures 4 and 5 are enlarged-scale views of respective details of Figure 3 that refer, respectively, to the first and the second entry regions of the pre-assembly unit according to the invention;
Figures 4a and 5a are views, similar to the preceding ones, referring to a second embodiment of the first and second grip means;
Figure 6 is a schematic front elevation view of the apparatus of the preceding figures in a second step of operation;
Figure 7 is an enlarged-scale view of a detail of Figure 6 referring to the working region of the pre-assembly unit according to the invention;
Figure 7a is a view, similar to the preceding one, referring to the second embodiment of the first and second grip means;
Figure 8 is a schematic front elevation view of the apparatus of the preceding figures in a third step of operation.

With reference to the figures, an apparatus for assembling thermal insulation profiles is generally designated by the reference numeral 100.

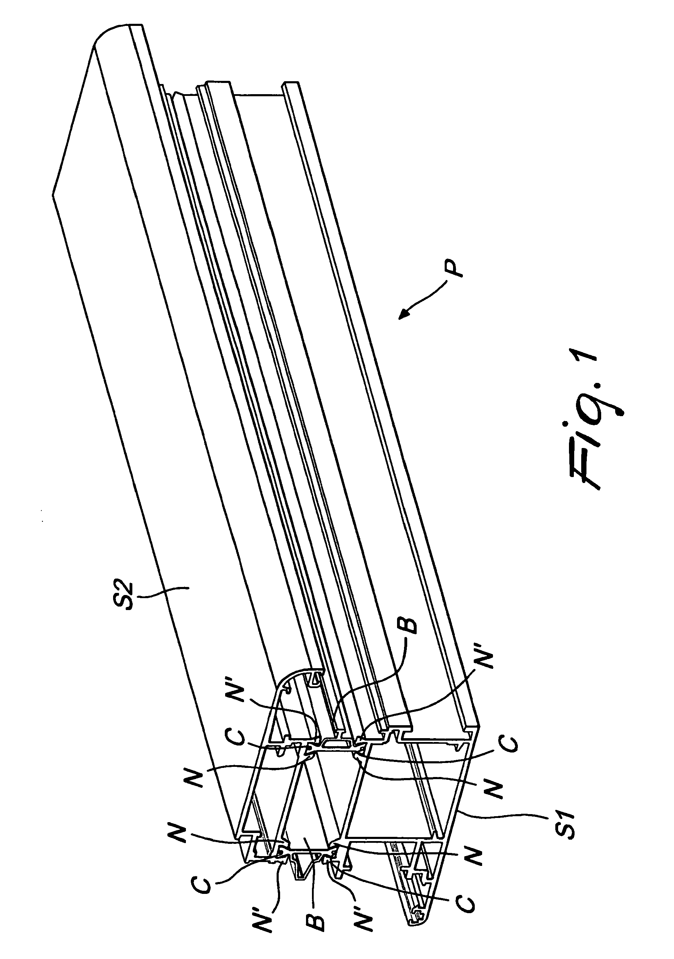

As is known, a thermal insulation profile P, illustrated by way of example in Figure 1, is composed of a first profile part S 1 and a second profile part S2, which are constituted by respective extruded bars made of aluminum; each profile part is provided on the peripheral region with at least one longitudinal slot C, which is delimited by two mutually opposite ridges N. The profile parts S1 and S2 are arranged so as to be mutually adjacent with the respective slots C facing each other so as to form at least one receptacle of a corresponding connecting partition B, which is constituted by an elongated bar made of thermally insulating material such as polyamide or another plastic material.

The cross-section of the profile parts S 1 and S2 and of the profile P that is composed by them can have various shapes according to the requirements of the case. In any case, each profile part S 1 or S2 has the corresponding ridges N that protrude and the remaining portion of the section fully comprised within a half-plane delimited by the outline of the plane of arrangement of such ridges for allowing the assembly of the profile.

It is noted that each profile part S1 or S2 can have two, or more, parallel slots C, so as to form two, or more, receptacles for respective connecting partitions B. The illustrated embodiment shows an apparatus 100 for working a profile P provided with two connecting partitions B, the profile parts S1 and S2 of which are each provided with two equidistant slots C, so that by arranging adjacently the two profile parts S1 and S2 with the corresponding slots C in facing pairs two receptacles for inserting respective connecting partitions B are delimited.

In this situation, the term "external" ridges, designated in the figures by the reference letter N', refers to the ones at the end, which are arranged toward the peripheral region of the profile part S1 or S2 and thus can be accessed during the working thereof.

The apparatus 100 has a unit for the pre-assembly of the profiles P, which is generally designated by the reference numeral 1 and comprises a first entry region 2 and a second entry region 3, respectively, of the first profile part S1 and of the second profile part S2 in the entry configuration.

The first entry region 2 is provided with first supporting means 4 with idle rollers 5 of a known type, the rollers 5 being of an interchangeable type or with a position that can be adjusted as the cross-section of the first profile part S1 varies.

Moreover, the second entry region 3 is provided with second supporting means 6 with idle rollers 7 of a known type, the rollers 7 being of an interchangeable type or with a position that can be adjusted as the cross-section of the second profile part S2 varies.

The first and second entry regions 2 and 3 are further provided with respective mechanical references, not shown in detail, for the correct positioning of the profile parts S1 and S2 in the respective entry configurations.

In the illustrated embodiment, the profile parts S 1 and S2 in the entry configuration are arranged horizontally and so that the respective slots C are directed upward. The entry regions 2 and 3 are arranged laterally adjacent in a direction which is transverse with respect to the arrangement of the profile parts S1 and S2 in the entry configuration, so that such profile parts are parallel.

Moreover, the first profile part S1 in the entry configuration in the first entry region 2 is referred to a first axis, which coincides with the arrangement of one of the slots C and preferably the one facing the second entry region 3. Likewise, the second profile part S2 in the entry configuration in the second entry region 3 is referred to a second axis, which is parallel to the first axis and coincides with the arrangement of one of the slots C, preferably the one directed toward the first entry region 2.

The unit 1 further has at least one working region 8, in which the profile parts S1 and S2 are arranged in a pre-assembly configuration, i.e., mutually adjacent with the respective slots C in facing pairs, so as to form respective receptacles for corresponding connecting partitions B. The distance between the profile parts S1 and S2 in the pre-assembly configuration depends on the height of the connecting partitions B used.

The working region 8 is laterally adjacent to the second entry region 3 in a direction that is transverse to the arrangement of the profile parts S 1 and S2, on the side opposite the first entry region 2.

The working region 8 is provided with means 9 for inserting the connecting partitions B which are constituted by a conventional bar insertion device, which is not described in detail because it is of a known type.

In the embodiment shown, in the pre-assembly configuration the first profile part S1 is arranged horizontally and the corresponding slots C are directed upward, whereas the second profile part S2 is superimposed on the preceding one with the corresponding slots C directed downward.

The working region 8 is provided with third supporting means 10 with idle rollers 11 of a known type, the rollers 11 being of the interchangeable type or having a position that is adjustable according to the variation of the cross-section of the first profile part S 1 that is resting on them.

Moreover, there are conventional first pusher means 12 in the working region 8 for feeding the profile parts S 1 and S2 in the pre-assembly configuration toward the insertion means 9.

Moreover, the unit 1 is provided with first and second means, 13 and 14, respectively, for gripping the first and second profile parts S1 and S2 at least in the pre-assembly configuration.

At least one of the first and second grip means 13 and 14 is of the automatic type and adapted to interfere with the respective profile part S 1 or S2 at the external ridges N' that delimit the corresponding slots C.

Preferably, both the first grip means and the second grip means 13 and 14 are of the automatic type and are adapted to interfere respectively with the first and second profile parts S1 and S2 at the external ridges N' that delimit the corresponding slots C.

The first and second grip means 13 and 14 have at least one respective pair of first and second jaws 15 and 16, each pair having at least one jaw that can move alternately toward and away from the other jaw so as to achieve the fastening or release of the corresponding profile part S 1 or S2 at the corresponding external ridges N'. In the figures, the movable jaws of each pair of first and second jaws 15 and 16 are designated by the reference numerals 15' and 16'.

The jaws 15 and 16 are constituted by respective substantially plate-shaped elements, at least proximately to the region of contact with the respective profile parts S 1 and S2, and are arranged on a horizontal plane. The planar arrangement of the jaws 15 and 16 allows their superimposition, proximately to each other, in the pre-assembly configuration.

In this embodiment, the jaws 15 and 16 abut substantially against the sides of the external ridges N'.

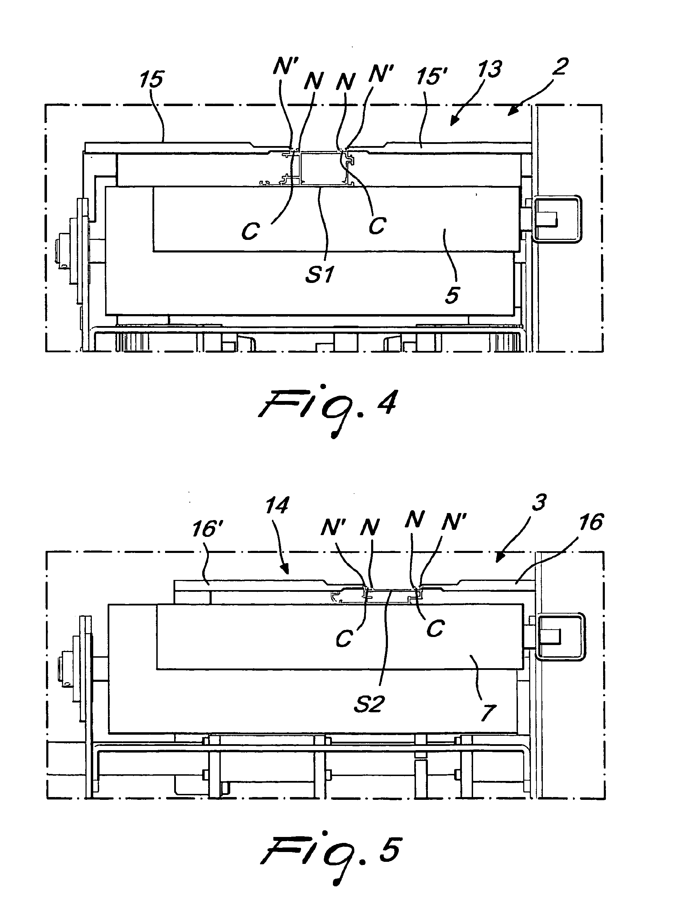

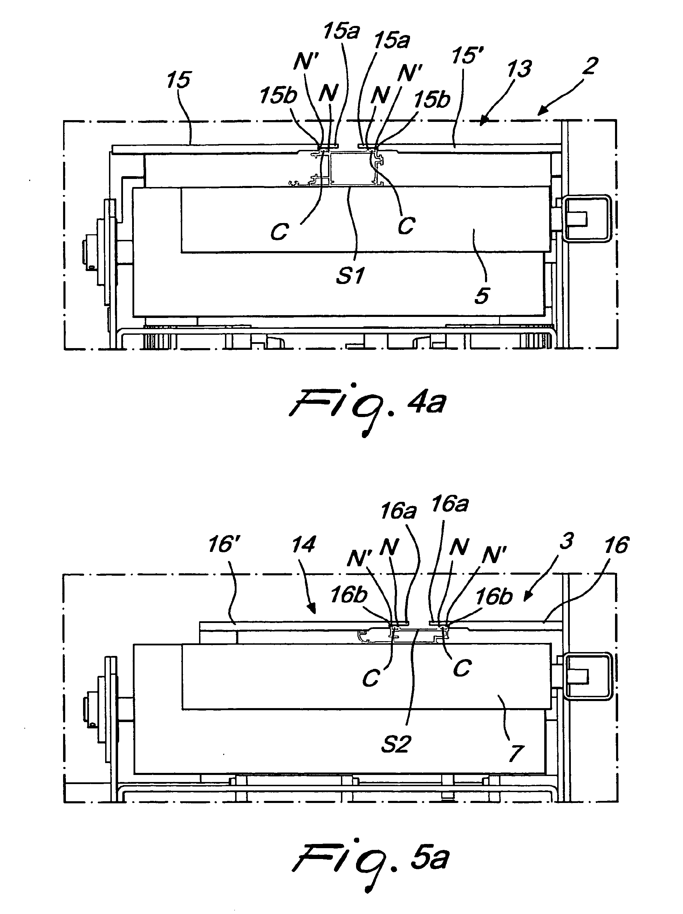

In a second embodiment (Figures 4a, 5a, 7a), each jaw 15 or 16 can have at its end a respective extension 15a or 16a to form a shoulder 15b or 16b directed toward the corresponding profile part S 1 or S2. When the jaw 15 or 16 is fastened on the corresponding profile part S1 or S2, the corresponding extension 15a or 15b rests on the corresponding ridge N', which abuts both laterally and at the end, which is called "hammed", against the shoulder 15b or 16b. In this manner, each external ridge N' is fastened at at least two contiguous faces for optimizing the stability of the grip.

Preferably, the first and second grip means, 13 and 14, respectively, have a plurality of respective pairs of first and second jaws 15 and 16.

Moreover, first means are provided for actuating the alternating translational motion of the movable jaws 15' and 16' of each pair in the direction for approach and spacing with respect to the corresponding fixed jaw, which are not detailed because they are of the conventional type. The first actuation means use fluid-operated actuators, but they might also be of the mechanical or electromechanical type.

However, in an alternative embodiment both jaws of each pair can be movable alternately in the direction for mutual approach and spacing.

The unit 1, moreover, has first and second means, 17 and 18, respectively, for moving the first and second grip means 13 and 14 between respective grip positions in the entry regions 2 and 3 of the respective profile parts S1 and S2 and respective positions for release of such profile parts in the pre-assembly configuration in the working region 8.

It is noted that in the grip position the first fixed jaws 15 are aligned in plan view proximately to the first axis and the second fixed jaws 16 are aligned in plan view proximately to the second axis.

More particularly, the first movement means 17 comprise a first supporting frame 19 and a first structure 20 for supporting the first grip means 13, which is associated with the first frame 19 so that it can slide along at least one first direction, indicated by the arrow D1 in the figures, which passes through the first entry region 2 and the working region 8. The first movement means 17 therefore have second means 21 for actuation with an alternating translational motion of the first structure 20 with respect to the first frame 19 along the first direction D1.

The first direction D1 is preferably horizontal and at right angles to the arrangement of the profile parts S1 and S2.

The first frame 19 is constituted by a sort of quadrangular frame, which rests on the ground and has two sides 19a, which are parallel to the first direction D1 and with which the first structure 20 is slidingly associated.

The first structure 20 is substantially constituted by a first beam 22, which is arranged horizontally and at right angles to the first direction D1 and along which two or more pairs of first jaws 15 are distributed; at its opposite ends, such beam is associated with respective supporting elements 23, which are associated so as to slide along the sides 19a of the first frame 19.

The second actuation means 21 provide for a pair of toothed belts 24, each one of which is arranged at one side 19a. Each belt 24 is closed on itself so as to form a loop that lies on a vertical plane proximate to the corresponding side 19a and is wound around an idle pulley 25 and a driving pulley 26.

Each supporting element 23 is provided with appropriate toothed profiles, which are not visible and engage in a respective belt 24 arranged at the same side 19a.

The second actuation means 21 further have a reversible electric motor 27, which is supported by the first frame 19 for the rotary actuation of a shaft 28 to the ends of which the driving pulleys 26 of the two belts 24 are keyed.

In this manner, synchronization in the translation of the two supporting elements 23 along the respective sides 19a is ensured.

However, the second actuation means 21 might also be provided in a different manner and might be constituted, for example, by conventional electric or fluid-operated actuators.

Advantageously, the pairs of first jaws 15 are associated with the first frame 19 so that they can slide along a second direction, indicated by the arrow D2 in the figures, which is perpendicular to the first direction D1, at least to arrange the first jaws with respect to the first profile part S 1 in the configuration for entry in the first entry region 2 on a plane that intersects the external ridges N'.

The second direction D2 is preferably vertical.

More particularly, the pairs of first jaws 15 can move alternately along the second direction D2 jointly with the first beam 22, the supporting elements 23 being able to move with respect to the first frame 19 only along the first direction D1.

The first movement means 17 thus have third means 29 for actuating with an alternating translational motion, along the second direction D2, the pairs of first jaws 15 with respect to the first frame 19, which are interposed between the first beam 22 and each one of the supporting elements 23.

In the illustrated embodiment, the third actuation means 29 are of a substantially mechanical type, having a system with motorized toothed belts which is not described in detail because it is of a known type, but they might also be provided in a different manner by providing, for example, for the use of electric or fluid-operated actuators.

The pairs of first jaws 15 are thus active along the second direction D2 on at least three levels that correspond to the first position for gripping the first profile part S1 in the entry configuration in the first entry region 2, to the first position for transfer from the first entry region to the working region 8, and to the first position for release of the first profile part S 1 in the configuration for pre-assembly in the working region.

The first transfer position is lowered with respect to the others for avoiding interference with the second grip means 14.

The second movement means 18 comprise a second supporting frame 30 and a second supporting structure 31 for the second grip means 14, which is associated with the second frame 30 and can move alternately between a second position for gripping the second profile part S2 in the configuration for entry in the second entry region 3 and a second position for release of the second profile part in the pre-assembly configuration in the working region 8. The second movement means 18 are provided, moreover, with fourth means 32 for actuation of the alternating movement of the second structure 31 with respect to the second frame 30.

The second frame 30 is constituted by a sort of footing 33, which is arranged on the ground between the second entry region 3 and the working region 8 and extends parallel to the arrangement of the profile parts S1 and S2 and from the ends of which two column elements 34 rise vertically.

The second structure 31 is constituted substantially by a second beam, which is arranged horizontally and parallel to the arrangement of the profile parts S 1 and S2, with its mutually opposite ends associated with the column elements 34, and supports in a cantilever fashion the pairs of second jaws 16.

According to the illustrated embodiment, the second beam 31 is associated with the second frame 30 so that it can oscillate between the second grip position and the second release position, and the fourth actuation means 32 are rotary actuation means.

The arrangement of the profile parts S1 and S2 in the corresponding entry configurations with the corresponding slots C equally oriented (turned upward) in fact makes it necessary to turn over one of the two profile parts and preferably the second profile part S2 for arranging it in the pre-assembly configuration with the corresponding slots C directed downward.

More in particular, the fourth actuation means 32 actuate an oscillation with a breadth of 180° of the second beam 31 jointly with the pairs of second jaws 16. The fourth actuation means 32, not described in detail because they are of a known type, can have two electric motors, which are supported by the column elements 34 and are associated with the second beam 31 by interposition of respective gear assemblies.

Advantageously, the second grip means 14 are associated with the second frame 30 so that they can slide along a third direction, indicated by the arrow D3 in the figures, which is substantially parallel to the second direction D2, at least for positioning the pairs of second jaws 16 in the second grip position on a plane that intersects the external ridges N' of the second profile part S2 in the entry configuration.

The third direction D3 is therefore vertical as well.

The pairs of second jaws 16 are, therefore, active along the third direction D3 on at least two levels that correspond to the second grip and release positions. The height of such second positions can optionally coincide.

The second movement means 18 thus have fifth means 35 for actuation with an alternating translational motion of the second beam 31 and of the pairs of second jaws 16 along the column elements 34. The fifth actuation means 35, not described in detail because they are of a known type, have a pair of fluid-operated actuators that operate in a vertical direction and are interposed between the column elements 34 and the second beam 31; however, they might also be provided in a different manner and might be, for example, of the electric or electromechanical type.

The apparatus 100 further has a first machine tool and a second machine tool, respectively 101 and 102, for the machining of the slots C of the first profile part and of the second profile part, respectively S1 and S2.

In particular, the first machine tool 101 is arranged so that the corresponding associated output is upstream of the first entry region 2 and the second machine tool 102 is arranged so that the corresponding associated output is upstream of the second entry region 3.

The machine tools 101 and 102, not described in detail because they are of a known type, are of the type of conventional knurling machines provided with milling heads for providing incisions along the slots C.

Each machine tool 101 and 102 is provided with a pair of milling heads, one of which has a fixed position and the other one has an adjustable position. The fixed heads of the machine tools 101 and 102 are aligned respectively with the first axis and the second axis.

However, it is also possible for all the milling heads of the machine tools 101 and 102 to be movable; in this case, both jaws 15 and 16 of each pair can move toward and away from each other in order to grip and release the respective profile parts S 1 and S2.

Finally, the apparatus 100 is provided with means 103 for plastic deformation of the external ridges N' of the pre-assembled profile P' which are associated downstream of the working region 8, means 104 being provided for feeding the pre-assembled profile P' from the working region 8 to a loading region 105 for the means 103 for plastic deformation.

The plastic deformation means 103, not described in detail because they are of a known type, are of the type of a conventional rolling machine.

The loading region 105 is laterally adjacent to the working region 8 along the first direction D1, on the side opposite to the second entry region 3.

The loading region 105 is provided with fourth supporting means 106 with idle rollers of a known type, the rollers being of the interchangeable type or having a position that is adjustable according to the variation of the cross-section of the pre-assembled profile P'.

Further, the loading region 105 is provided with second pusher means 107, not described in detail because they are of a known type, for sending the pre-assembled profile P' to the plastic deformation means 103.

The feeding means 104 have at least two pairs of third jaws 108 of the conventional type, each pair having at least one jaw that can move alternately toward and away from the other one in order to achieve the fastening or release of the pre-assembled profile P' at the external sides of the first profile part S 1 arranged in a lower region. Moreover, means for the actuation of the alternating translational motion of the movable jaws of each pair toward and away from the corresponding fixed jaw are provided and are not described in detail because they are of a known type.

The pairs of third jaws 108 are distributed in a direction which is parallel to the arrangement of the pre-assembled profile P'.

The apparatus 100 has third means for moving the pairs of third jaws 108 for actuation of the alternating translational motion of the jaws parallel to the directions D1 and D2, which are not described in detail because they are very similar to the ones described above with reference to the first movement means 17.

However, different embodiments of the feeding means 104, which use for example pushers or belt transfer systems are not excluded.

The operation of the apparatus 100 can be managed automatically by means of a conventional electronic unit for management and control, provided with adapted sensors and transducers.

With reference to the working cycle of a profile P, the operation of the present invention is as follows.

The profile parts S 1 and S2 machined by the respective machine tools 101 and 102 are unloaded onto the first and second supporting means, respectively 4 and 6, in the first and second entry regions 2 and 3.

The profile parts S1 and S2 are arranged in the respective entry configurations with the corresponding slots C directed upward.

The profile parts S1 and S2 are, therefore, supported on the rollers, respectively 5 and 7.

With reference to the first entry region 2, in this step the pairs of first jaws 15 are arranged in the grip position, inserted between the rollers 5 and with the first movable jaws 15' spaced from the corresponding fixed jaws.

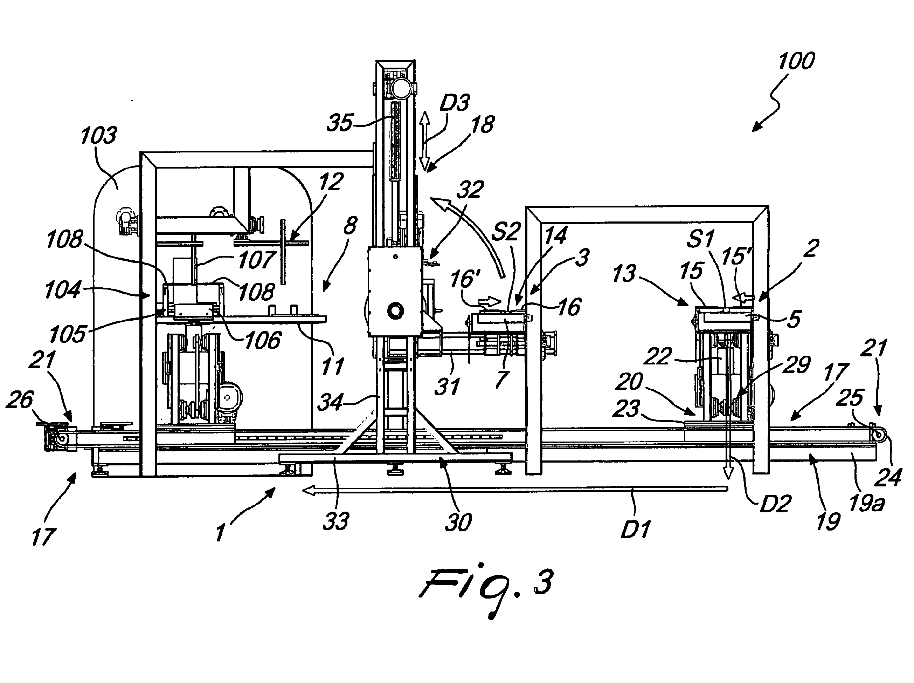

When the first profile part S 1 has exited completely from the first machine tool 101, being arranged on the rollers 5, the pairs of first jaws 15 are fastened onto the corresponding external ridges N' (Figures 3 and 4).

Figure 4a is a view of the first grip position of a pair of first jaws 15 in the alternative embodiment.

The same occurs in the second entry region 3 in which, when the second profile part S2 in output from the second machine tool 102 is arranged so as to rest on the rollers 7, it is gripped by the pairs of second jaws 16, which interfere with the corresponding external ridges N' (Figures 3 and 5).

Figure 5a is a view of the second grip position of a pair of second jaws 16 in the alternative embodiment.

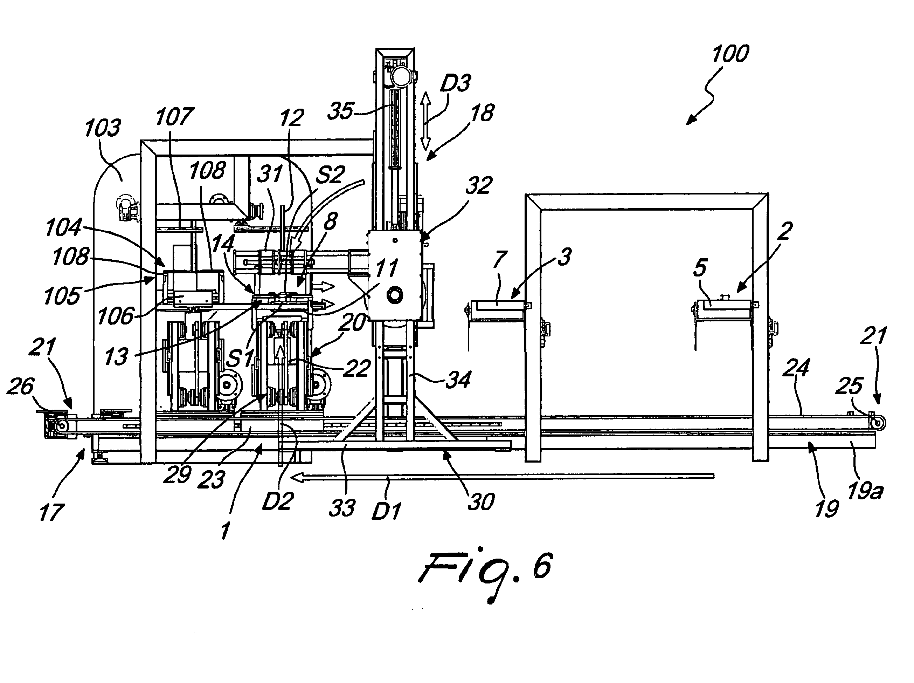

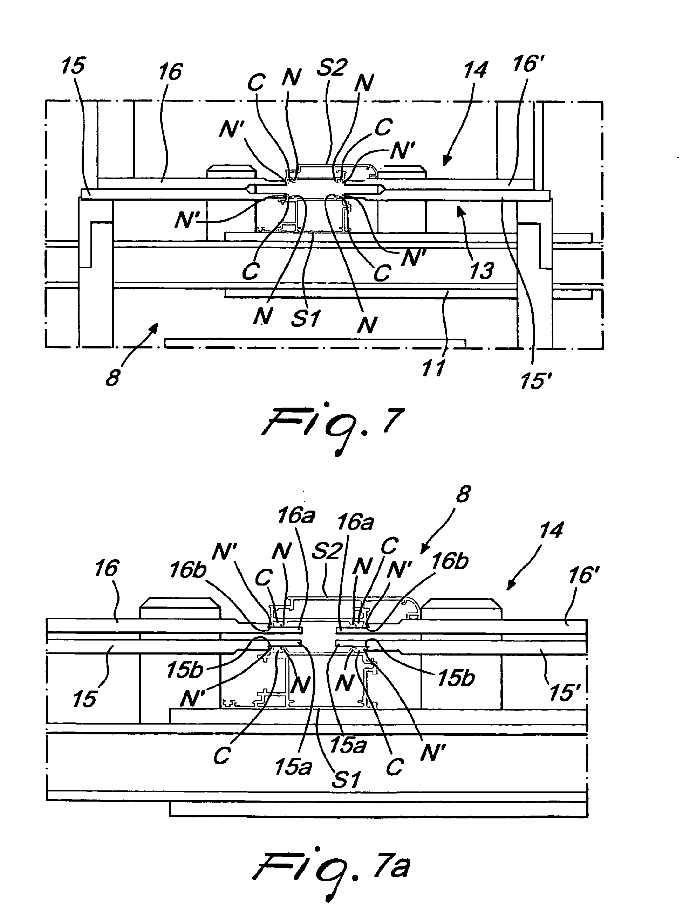

Subsequently, by way of the actuation of the first movement means 17, the pairs of first jaws 15 transfer the first profile part S 1 into the pre-assembly configuration (Figures 6 and 7).

The pairs of first jaws 15 fastened onto the first profile part S 1 rise for disengaging the first profile part S1 from the rollers 5, move a certain distance along the first direction D1 to exit from the first supporting means 4, move downward so as not to interfere with the second movement means 18, and resume moving in the direction D1 toward the working region 8, where they reach the height that corresponds to the release configuration.

Likewise, by way of the actuation of the second movement means 18, the pairs of second jaws 16 transfer the second profile part S2 into the pre-assembly configuration (Figures 6 and 7).

The pairs of second jaws 16 fastened onto the second profile part S2 are actuated rotationally toward the working region 8, where they move along the third direction D3 at the height that corresponds to the release configuration.

Figure 7a is a detail view of the pre-assembly configuration in case of use of pairs of first and second jaws 15 and 16 in the second embodiment.

With the pairs of first and second jaws 15 and 16 still fastened on the external ridges N' of the respective profile parts S1 and S2, the first pusher means 12 are activated for feeding the profile parts S1 and S2 in the pre-assembly configuration to the insertion means 9. At this point the ends of the profile parts S 1 and S2 at the insertion means 9 are gripped by conventional spacer systems usually present in known bar inserting devices for introducing one or more connecting partitions B to achieve the pre-assembly of the profile P'.

Once the profile parts S1 and S2 have been sent to the insertion means 9, the pairs of first and second jaws 15 and 16 open, releasing the respective profile parts S1 and S2, and, actuated by the respective movement means 17 and 18, return to the respective grip positions.

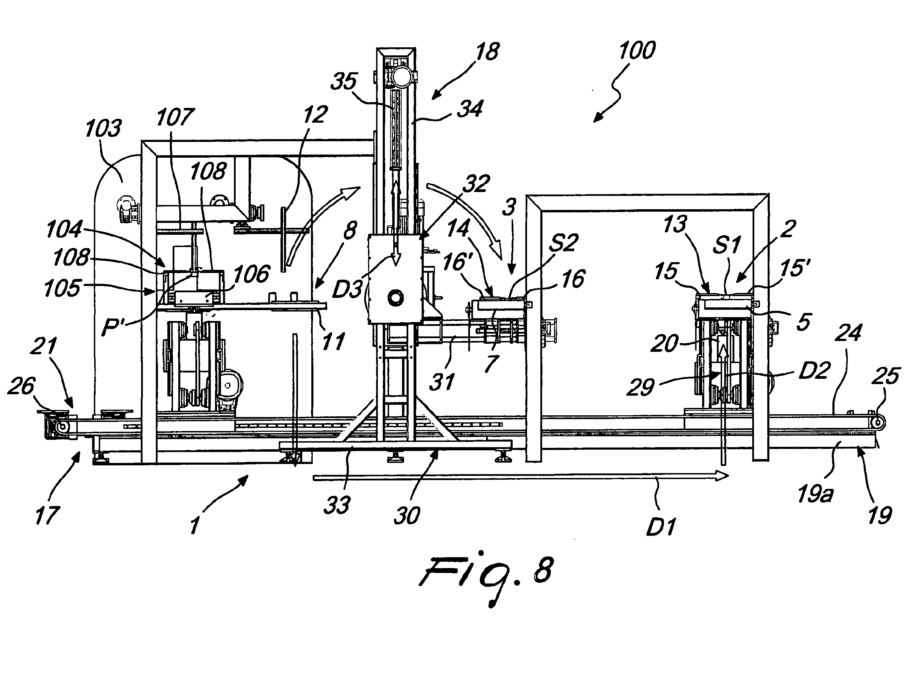

The pre-assembled profile P' is taken by the feeder means 104, which transfer it to the plastic deformation means 103 to obtain the permanently assembled profile P (Figure 8). The first and second grip means 13 and 14, actuated by the respective first and second actuation means 18 and 19, return to the corresponding grip positions in the entry regions 2 and 3 for the start of a new working cycle.

It is noted that the pre-assembly unit 1 can be used in assembly apparatuses 100 having different structures, the layout of such apparatus being strongly conditioned, among other factors, by the orientation with which the profile parts S 1 and S2 are introduced and moved.

Moreover, in a possible variation, the pre-assembly unit 1 might have a fixed position, providing the entry of the profile parts S 1 and S2 directly in the working region 8 in a pre-assembly configuration. In this case, the first and second movement means 17 and 18 might not be provided.

In practice it has been found that the described invention fully achieves the intended aim and objects and in particular the fact is stressed that the invention makes it possible to render the movement of the profile parts independent of their shapes, so as to make it automatic and flexible and avoid the risk of damaging the profiles obtained.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A unit (1) for the pre-assembly of thermal insulation profiles (P) of the type comprising a first profile part (S1) and a second profile part (S2), each of which is provided with at least one longitudinal slot (C) delimited by a pair of mutually opposite ridges (N), said parts being arranged with the respective slots (C) in facing pairs so as to form at least one receptacle for at least one connecting partition (B) of said profile parts (S1, S2), comprising at least one working region (8) in which said first and second profile parts (S1, S2) are positioned in a pre-assembly configuration with the respective slots (C) in facing pairs so as to form said at least one receptacle, said region being provided with means (9) for the insertion of said at least one connecting partition (B) in the corresponding receptacle, and with first and second means (13, 14) of the automatic type, respectively, for gripping said first and second profile parts (S1, S2) at least in the pre-assembly configuration, **characterized in that** said first and/or second grip means (13, 14) are adapted to interfere with the respective profile part (S1, S2) at the external ridges (N') that delimit the corresponding slots (C).

2. The unit (1) according to claim 1, **characterized in that** both of said first and second grip means (13, 14) are of the automatic type and are adapted to interfere respectively with said first and second profile parts (S1, S2) at the external ridges (N') that delimit the corresponding slots (C).

3. The unit (1) according to one or more of the preceding claims, **characterized in that** said first grip means (13) comprise at least one pair of first jaws (15), of which at least one (15') can move toward and away from the other, and first means for actuating the alternating translational motion of said at least one first movable jaw (15') so as to achieve the fastening or release of said first profile part (S1), the first jaws (15) being adapted to grip the first profile part (S1) at the corresponding external ridges (N').

4. The unit (1) according to one or more of the preceding claims, **characterized in that** said second grip means (14) comprise at least one pair of second jaws (16), of which at least one (16') can move toward and away from the other, and first means for actuation of the alternating translational motion of said at least one second movable jaw (16') so as to achieve the fastening or release of said second profile part (S2), the second jaws (16) being adapted to grip the second profile part (S2) at the corresponding external ridges (N').

5. The unit (1) according to claim 3 or 4, **characterized in that** each one of said first or second jaws (15 or 16) has a shoulder (15b or 16b) adapted to abut against at least two contiguous faces of the corresponding external ridge (N').

6. The unit (1) according to one or more of the preceding claims, **characterized in that** said first and second grip means (13, 14) comprise a plurality of respective pairs of first and second jaws (15, 16).

7. The unit (1) according to one or more of the preceding claims, **characterized in that** it comprises at least one first entry region (2) and one second entry region (3), respectively, of said first and second profile parts (S1, S2) arranged in respective entry configurations and first and second means (17, 18) for the movement respectively of said first and second grip means (13, 14) from respective grip positions at the entry region (2, 3) of the corresponding profile part (S1, S2) to respective release positions at the working region (8).

8. The unit (1) according to claim 7, **characterized in that** said first movement means (17) comprise a first supporting frame (19), a first supporting structure (20) for said first grip means (13) that is associated with said first frame (19) and can slide along at least one first direction (D1) that passes through said first entry region (2) and said working region (8) and second means (21) for actuation with an alternating translational motion of said first structure (20) along said first direction (D1).

9. The unit (1) according to claim 8, **characterized in that** said first grip means (13) are associated with said first frame (19) so that they can slide along at least one second direction (D2) that is transverse with respect to said first direction (D1) at least for the positioning of said first grip means (13) with respect to said first profile part (S1) in the configuration for entry at the corresponding external ridges (N'), said first movement means (17) comprising third means (29) for actuating with an alternating translational motion said first grip means (13) along the second direction (D2).

10. The unit (1) according to claim 9, **characterized in that** said first grip means (13) operate along said second direction (D2) in at least three positions, of which a first position for gripping the first profile part (S1) in the entry configuration, a first position for transfer between the first entry region (2) and the working region (8) along said first direction (D1), and a first position for release of said first profile part in the pre-assembly configuration, in the first grip position the first grip means (13) being arranged on a plane that intersects the external ridges (N') of the first profile part (S1) in the entry configuration.

11. The unit (1) according to claim 7, **characterized in that** said second movement means (18) comprise a second supporting frame (30), a second supporting structure (31) for said second grip means (14) that is associated with said second frame (30) and can move alternately between a second position for gripping the second profile part (S2) in the entry configuration and a second position for release of said second profile part in the pre-assembly configuration and fourth means (32) for actuation of the alternating movement of said second structure (31) between said second positions.

12. The unit (1) according to claim 11, **characterized in that** said second supporting structure (31) is associated with said second frame (30) so that it can oscillate between said second positions, and **in that** said fourth actuation means (32) are rotary actuation means, the first profile part (S1) and the second profile part (S2) being arranged in the respective entry configurations with the corresponding slots (C) equally oriented.

13. The unit (1) according to one or more of the preceding claims, **characterized in that** said second grip means (14) are associated with said second frame so that they can slide along at least one third direction (D3) that is substantially parallel to said second direction (D2) at least for the positioning of said second grip means (14) with respect to said second profile part (S2) in the entry configuration at the corresponding external ridges (N'), said second movement means (18) comprising fifth means (35) for actuation with an alternating translational motion of said second grip means (14) along the third direction (D3).

14. The unit (1) according to claim 13, **characterized in that** said second grip means (14) operate along said third direction (D3) on at least two levels that correspond to said second grip and release positions, in the second grip position the second grip means (14) being arranged on a plane that intersects the external ridges (N') of the second profile part (S2) in the entry configuration.

15. An apparatus (100) for assembling thermal insulation profiles (P), **characterized in that** it comprises a pre-assembly unit (1) according to one or more of the preceding claims, having said first and second entry regions (2, 3) associated with the outlet, respectively, of a first machine tool (101) and a second machine tool (102) for machining said at least one longitudinal slot (C), respectively, of said first and second profile parts (S1, S2) and said working region (8) associated with the feed of means (103) for the plastic deformation of the outer ridges (N') of said pre-assembled profile (P').

16. A method for pre-assembly of thermal insulation profiles (P), comprising the steps of
- providing a first profile part (S1) provided with at least one longitudinal slot (C) that is delimited by a pair of mutually opposite ridges (N) and is arranged in the entry configuration with said at least one slot (C) directed upward;
- providing a second profile part (S2) provided with at least one longitudinal slot (C) that is delimited by a pair of mutually opposite ridges (N) and is arranged in the entry configuration with said at least one slot (C) directed upward;
- providing at least one partition (B) for connecting said first and second profile parts (S1, S2);
- moving said first and second profile parts (S1, S2) from the respective entry configurations to a pre-assembly configuration in which said profile parts are arranged adjacent to the corresponding slots (C) in facing pairs, so as to form at least one receptacle for said connecting partition (B), the second profile part (S2) being rotated through 180° with respect to its own longitudinal axis so as to arrange the corresponding slot (C) directed downward;
- inserting said connecting partition (B) along said seat,
**characterized in that** said movement comprises gripping said first and second profile parts (S1, S2) at the corresponding external ridges (N').

## Patentansprüche

1. Eine Einheit (1) für die Vormontage von Wärmedämmungsprofilen (P), von der Art, die ein erstes Profilteil (S1) und ein zweites Profilteil (S2) umfasst, von denen jedes mit mindestens einem Längsschlitz (C) versehen ist, der von einem Paar einander gegenüberliegender Grate (N) begrenzt wird, wobei die Teile mit den jeweiligen Schlitzen (C) in gegenüberliegenden Paaren angeordnet sind, so dass sie mindestens einen Sitz für mindestens eine Verbindungswand (B) der Profilteile (S1, 52) bilden, umfassend mindestens einen Arbeitsbereich (8), in dem das erste und das zweite Profilteil (S1, S2) in einer Vormontageanordnung positioniert sind, mit den jeweiligen Schlitzen (C) in gegenüberliegenden Paaren, so dass sie den mindestens einen Sitz bilden, wobei der Bereich mit Mitteln (9) für das Einsetzen der mindestens einen Verbindungswand (B) in den entsprechenden Sitz ausgestattet ist, und mit ersten und zweiten Mitteln (13, 14) vom automatischen Typ, die jeweils das erste beziehungsweise das zweite Profilteil (S1, S2) zumindest in der Vormontageanordnung greifen, **dadurch gekennzeichnet, dass** das erste und/oder zweite Greifmittel (13, 14) ausgebildet ist, um mit dem jeweiligen Profilteil (S1, S2) an den äußeren Graten (N') zu interferieren, welche die jeweiligen Schlitze (C) begrenzen.

2. Die Einheit (1) gemäß Anspruch 1, **dadurch gekennzeichnet, dass** sowohl das erste als auch das zweite Greifmittel (13, 14) vom automatischen Typ sind und ausgebildet sind, um jeweils mit dem ersten beziehungsweise dem zweiten Profilteil (S1, S2) an den äußeren Graten (N') zu interferieren, welche die entsprechenden Schlitze (C) begrenzen.

3. Die Einheit (1) gemäß einem oder mehreren der vorangehenden Ansprüche, **dadurch gekennzeichnet, dass** die ersten Greifmittel (13) mindestens ein Paar erster Backen (15) umfassen, von denen sich mindestens eine (15') zur anderen hin und von ihr fort bewegen kann, und erste Mittel zur Aktivierung der alternierenden translatorischen Bewegung der mindestens einen ersten beweglichen Backe (15'), um so die Feststellung oder Lösung des ersten Profilteils (S1) zu erreichen, wobei die ersten Backen (15) ausgebildet sind, um das erste Profilteil (S1) an den entsprechenden Außengraten (N') zu ergreifen.

4. Die Einheit (1) gemäß einem oder mehreren der vorangehenden Ansprüche, **dadurch gekennzeichnet, dass** die zweiten Greifmittel (14) mindestens ein Paar zweiter Backen (16) umfassen, von denen mindestens eine (16') sich zur anderen hin und von ihr fort bewegen kann, und erste Mittel zur Aktivierung der alternierenden translatorischen Bewegung der mindestens einen zweiten beweglichen Backe (16'), um so die Feststellung oder Lösung des zweiten Profilteils (S2) zu erreichen, wobei die zweiten Backen (16) ausgebildet sind, um das zweite Profilteil (S2) an den entsprechenden äußeren Graten (N') zu ergreifen.

5. Die Einheit (1) gemäß Anspruch 3 oder 4, **dadurch gekennzeichnet, dass** jede der ersten oder zweiten Backen (15 oder 16) eine Schulter (15b oder 16b) hat, die ausgebildet ist, um gegen mindestens zwei benachbarte Flächen des entsprechenden äußeren Grats (N') anzustoßen.

6. Die Einheit (1) gemäß einem oder mehreren der vorangehenden Ansprüche, **dadurch gekennzeichnet, dass** die ersten und zweiten Greifmittel (13, 14) eine Vielzahl entsprechender Paare erster und zweiter Backen (15, 16) umfassen.

7. Die Einheit (1) gemäß einem oder mehreren der vorangehenden Ansprüche, **dadurch gekennzeichnet, dass** sie mindestens einen ersten Eintrittsbereich (2) und einen zweiten Eintrittsbereich (3) des ersten beziehungsweise zweiten Profilteils (S1, S2) umfasst, die in jeweiligen Eintrittsanordnungen angeordnet sind, und erste und zweite Mittel (17, 18) zur Bewegung des ersten beziehungsweise zweiten Greifmittels (13, 14) aus entsprechenden Greifpositionen am Eintrittsbereich (2, 3) des entsprechenden Profilteils (S1, S2) in entsprechende Lösungspositionen am Arbeitsbereich (8).

8. Die Einheit (1) gemäß Anspruch 7, **dadurch gekennzeichnet, dass** die ersten Bewegungsmittel (17) einen ersten Stützrahmen (19) umfasst, eine erste Stützstruktur (20) für das erste Greifmittel (13) umfasst, die mit dem ersten Rahmen (19) verknüpft ist und entlang mindestens einer ersten Richtung (D1) gleiten kann, die durch den ersten Eintrittsbereich (2) und den Arbeitsbereich (8) verläuft, und zweite Mittel (21) umfasst zur Aktivierung, mit einer alternierenden translatorischen Bewegung, der ersten Struktur (20) entlang der ersten Richtung (D1).

9. Die Einheit (1) gemäß Anspruch 8, **dadurch gekennzeichnet, dass** die ersten Greifmittel (13) so mit dem ersten Rahmen (19) verknüpft sind, dass sie entlang mindestens einer zweiten Richtung (D2) gleiten können, die quer zu der ersten Richtung (D1) ist, zumindest für die Positionierung des ersten Greifmittels (13) im Verhältnis zu dem ersten Profilteil (S1) in der Anordnung für den Eintritt an den entsprechenden äußeren Graten (N'), wobei die ersten Bewegungsmittel (17) dritte Mittel (29) zur Aktivierung, mit einer alternierenden translatorischen Bewegung, der ersten Greifmittel (13) entlang der zweiten Richtung (D2) umfassen.

10. Die Einheit (1) gemäß Anspruch 9, **dadurch gekennzeichnet, dass** die ersten Greifmittel (13) entlang der zweiten Richtung (D2) in mindestens drei Positionen arbeiten, wobei davon eine erste Position zum Greifen des ersten Profilteils (S1) in der Eintrittsanordnung, eine erste Position für die Überführung zwischen dem ersten Eintrittsbereich (2) und dem Arbeitsbereich (8) entlang der ersten Richtung (D1), und eine erste Position zum Lösen des ersten Profilteils in der Vormontageanordnung, wobei in der ersten Greifposition die ersten Greifmittel (13) auf einer Ebene angeordnet sind, welche die äußeren Grate (N') des ersten Profilteils (S1) in der Eintrittsanordnung schneidet.

11. Die Einheit (1) gemäß Anspruch 7, **dadurch gekennzeichnet, dass** die zweiten Bewegungsmittel (18) einen zweiten Stützrahmen (30) umfassen, eine zweite Stützstruktur (31) für die zweiten Greifmittel (14), die mit dem zweiten Rahmen (30) verknüpft ist und sich abwechselnd zwischen einer zweiten Position zum Greifen des zweiten Profilteils (S2) in der Eintrittsanordnung und einer zweiten Position zum Lösen des zweiten Profilteils in der Vormontageanordnung bewegen kann, und vierte Mittel (32) zur Aktivierung der alternierenden Bewegung der zweiten Struktur (31) zwischen den zweiten Positionen.

12. Die Einheit (1) gemäß Anspruch 11, **dadurch gekennzeichnet, dass** die zweite Stützstruktur (31) mit dem zweiten Rahmen (30) so verknüpft ist, dass sie zwischen den zweiten Positionen pendeln kann, und **dadurch**, dass die vierten Aktivierungsmittel (32) drehende Aktivierungsmittel sind, wobei das erste Profilteil (S1) und das zweite Profilteil (S2) in den jeweiligen Eintrittsanordnungen angeordnet sind, wobei die entsprechenden Schlitze (C) gleich ausgerichtet sind.

13. Die Einheit (1) gemäß einem oder mehreren der vorangehenden Ansprüche, **dadurch gekennzeichnet, dass** die zweiten Greifmittel (14) mit dem zweiten Rahmen so verknüpft sind, dass sie entlang mindestens einer dritten Richtung (D3) gleiten können, die im Wesentlichen parallel zu der zweiten Richtung (D2) ist, und zwar zumindest zur Positionierung der zweiten Greifmittel (14) im Verhältnis zu dem zweiten Profilteil (S2) in der Eintrittsanordnung an den entsprechenden äußeren Graten (N'), wobei die zweiten Bewegungsmittel (18) fünfte Mittel (35) zur Aktivierung, mit einer alternierenden translatorischen Bewegung, der zweiten Greifmittel (14) entlang der dritten Richtung (D3) umfassen.

14. Die Einheit (1) gemäß Anspruch 13, **dadurch gekennzeichnet, dass** die zweiten Greifmittel (14) entlang der dritten Richtung (D3) auf mindestens zwei Ebenen arbeiten, die den zweiten Greif- und Lösungspositionen entsprechen, wobei in der zweiten Greifposition die zweiten Greifmittel (14) auf einer Ebene angeordnet sind, welche die äußeren Grate (N') des zweiten Profilteils (S2) in der Eintrittsanordnung schneidet.

15. Eine Vorrichtung (100) für die Montage von Wärmedämmungsprofilen (P), **dadurch gekennzeichnet, dass** sie eine Vormontageeinheit (1) gemäß einem oder mehreren der vorangehenden Ansprüche umfasst, deren erster und zweiter Eintrittsbereich (2, 3) mit dem Ausgang einer ersten Werkzeugmaschine (101) beziehungsweise einer zweiten Werkzeugmaschine (102) verknüpft sind, für die maschinelle Bearbeitung des mindestens einen Längsschlitzes (C) des ersten beziehungsweise des zweiten Profilteils (S1, S2) und des Arbeitsbereichs (8), der mit der Zufuhr von Mitteln (103) für die plastische Verformung der äußeren Grate (N') des vormontierten Profils (P') verknüpft ist.

16. Ein Verfahren zur Vormontage von Wärmedämmungsprofilen (P), das folgende Schritte umfasst:
- Bereitstellung eines ersten Profilteils (S1), das mit mindestens einem Längsschlitz (C) ausgestattet ist, der von einem Paar einander gegenüberliegender Grate (N) begrenzt wird und das in der Eintrittsanordnung mit dem mindestens einen Schlitz (C) nach oben gerichtet angeordnet ist,
- Bereitstellung eines zweiten Profilteils (S2), das mit mindestens einem Längsschlitz (C) ausgestattet ist, der von einem Paar einander gegenüberliegender Grate (N) begrenzt wird und das in der Eintrittsanordnung mit dem mindestens einen Schlitz (C) nach oben gerichtet angeordnet ist,
- Bereitstellung mindestens einer Wand (B) zur Verbindung des ersten und des zweiten Profilteils (S1, S2),
- Bewegung des ersten und des zweiten Profilteils (S1, S2) aus den jeweiligen Eintrittsanordnungen in eine Vormontageanordnung, in der die Profilteile in gegenüberliegenden Paaren neben den entsprechenden Schlitzen (C) angeordnet sind, so dass sie mindestens einen Sitz für die Verbindungswand (B) bilden, wobei das zweite Profilteil (S2) um 180° um seine eigene Längsachse gedreht wird, so dass der entsprechende Schlitz (C) nach unten gerichtet angeordnet wird,
- Einsetzen der Verbindungswand (B) entlang dem Sitz,
**dadurch gekennzeichnet, dass** die Bewegung das Ergreifen des ersten und des zweiten Profilteils (S1, S2) an den jeweiligen äußeren Graten (N') umfasst.

## Revendications

1. Unité (1) pour le pré-assemblage des profilés d'isolation thermique (P) du type comprenant une première partie de profilé (S1) et une seconde partie de profilé (S2), chacune desquelles est dotée d'au moins une fente longitudinale (C) délimitée par une paire de crêtes (N) mutuellement opposées, lesdites parties étant agencées avec les fentes respectives (C) en paires se faisant face afin de former au moins un réceptacle pour au moins une cloison de raccordement (B) desdites parties de profilé (S1, S2), comprenant au moins une région de travail (8) dans laquelle lesdites première et seconde parties de profilé (S1, S2) sont positionnées dans une configuration de pré-assemblage avec les fentes respectives (C) en paires se faisant face afin de former ledit au moins un réceptacle, ladite région étant dotée de moyens (9) pour l'insertion de ladite au moins une cloison de raccordement (B) dans le réceptacle correspondant, et avec des premiers et seconds moyens (13, 14) de type automatiques, respectivement, pour serrer lesdites première et seconde parties de profilé (S1, S2) au moins dans la configuration de pré-assemblage, **caractérisé en ce que** lesdits premier et/ou second moyens de serrage (13, 14) sont adaptés pour interférer avec la partie de profilé respective (S1, S2) au niveau des crêtes externes (N') qui délimitent les fentes correspondantes (C).

2. Unité (1) selon la revendication 1, **caractérisée en ce qu'**à la fois lesdits premiers et seconds moyens de serrage (13, 14) sont de type automatique et sont adaptés pour interférer respectivement avec lesdites première et seconde parties de profilé (S1, S2) au niveau des crêtes externes (N') qui délimitent les fentes correspondantes (C).

3. Unité (1) selon une ou plusieurs des revendications précédentes, **caractérisée en ce que** lesdits premiers moyens de serrage (13) comprennent au moins une paire de premiers mors (15), parmi lesquels au moins un (15') peut se déplacer en direction et en éloignement de l'autre, et des premiers moyens d'actionnement du mouvement de translation alterné dudit au moins un premier mors mobile (15') afin de réaliser la fixation ou le desserrage de ladite première partie de profilé (S1), les premiers mors (15) étant adaptées pour serrer la première partie de profilé (S1) au niveau des crêtes externes correspondantes (N').

4. Unité (1) selon une ou plusieurs des revendications précédentes, **caractérisée en ce que** lesdits seconds moyens de serrage (14) comprennent au moins une paire de second mors (16), parmi lesquels au moins un (16') peut se déplacer en direction et en éloignement de l'autre, et des premiers moyens d'actionnement du mouvement de translation alterné dudit au moins un second mors mobile (16') afin de réaliser la fixation ou le desserrage de ladite seconde partie de profilé (S2), les seconds mors (16) étant adaptés pour serrer la seconde partie de profilé (S2) au niveau des crêtes externes correspondantes (N').

5. Unité (1) selon la revendication 3 ou 4, **caractérisée en ce que** chacun desdits premiers ou seconds mors (15 ou 16) comporte un épaulement (15b ou 16b) adapté pour buter contre au moins deux faces contiguës de la crête externe (N') correspondante.

6. Unité (1) selon une ou plusieurs des revendications précédentes, **caractérisée en ce que** lesdits premiers et seconds moyens de serrage (13, 14) comprennent une pluralité de paires respectives de premiers et seconds mors (15, 16).

7. Unité (1) selon une ou plusieurs des revendications précédentes, **caractérisée en ce qu'**elle comprend au moins une première région d'entrée (2) et une seconde région d'entrée (3), respectivement, desdites première et seconde parties de profilé (S1, S2) agencées dans des configurations d'entrée respectives et des premiers et deuxièmes moyens (17, 18) pour le déplacement respectivement desdits premiers et seconds moyens de serrage (13, 14) de positions de serrage respectives au niveau de la région d'entrée (2, 3) de la partie de profilé correspondante (S1, S2) vers des positions de desserrage respectives au niveau de la région de travail (8).

8. Unité (1) selon la revendication 7, **caractérisée en ce que** lesdits premiers moyens de 5déplacement (17) comprennent un premier cadre de support (19), une première structure de support (20) pour lesdits premiers moyens de serrage (13) qui est associée audit premier cadre de support (19) et peut coulisser le long d'au moins une première direction (D1) qui passe à travers ladite première région d'entrée (2) et ladite région de travail (8) et des deuxièmes moyens (21) d'actionnement avec un mouvement de translation alterné ladite structure (20) le long de ladite première direction (D1).

9. Unité (1) selon la revendication 8, **caractérisée en ce que** lesdits premiers moyens de serrage (13) sont associés audit premier cadre (19) afin qu'ils puissent coulisser le long d'au moins une deuxième direction (D2) qui est transversale par rapport à ladite première direction (D1) au moins pour le positionnement desdits premiers moyens de serrage (13) par rapport à ladite première partie de profilé (S1) dans la configuration permettant l'entrée au niveau des crêtes externes correspondantes (N'), lesdits premiers moyens de déplacement (17) comprenant des troisièmes moyens (29) d'actionnement avec un mouvement de translation alterné un mouvement desdits premiers moyens de serrage (13) le long de la deuxième direction (D2).

10. Unité (1) selon la revendication 9, **caractérisée en ce que** lesdits premiers moyens de serrage (13) fonctionnent le long de ladite deuxième direction (D2) dans au moins trois positions, parmi lesquelles une première position permettant de serrer la première partie de profilé (S1) dans la configuration d'entrée, une première position de transfert entre la première région d'entrée (2) et la région de travail (8) le long de ladite première direction (D1), et une première position permettant de desserrer ladite première partie de profilé dans la configuration de pré-assemblage, dans la première position de serrage les premiers moyens de serrage (13) étant agencés sur un plan qui coupe les crêtes externes (N') de la première partie de profilé (S1) dans la configuration d'entrée.

11. Unité (1) selon la revendication 7, **caractérisée en ce que** lesdits seconds moyens de déplacement (18) comprennent un second cadre d'appui (30), une seconde structure de support (31) pour lesdits seconds moyens de serrage (14) qui est associée audit second cadre (30) et peut se déplacer alternativement entre une seconde position permettant de serrer la seconde partie de profilé (S2) dans la configuration d'entrée et une seconde position permettant de desserrer ladite seconde partie de profilé dans la configuration de pré-assemblage et un quatrième moyen d'actionnement (32) dudit mouvement alterné de ladite seconde structure (31) entre lesdites secondes positions.

12. Unité (1) selon la revendication 11, **caractérisée en ce que** ladite seconde structure de support (31) est associée audit second cadre (30) de sorte qu'il peut osciller entre lesdites secondes positions, et **en ce que** lesdits quatrièmes moyens d'actionnement (32) sont des moyens d'actionnement rotatifs, la première partie de profilé (S1) et la seconde partie de profilé (S2) étant agencées dans les configurations d'entrée respectives avec les fentes correspondantes (C) orientées de façon égale.

13. Unité (1) selon une ou plusieurs des revendications précédentes, **caractérisée en ce que** lesdits seconds moyens de serrage (14) sont associés audit second cadre afin qu'ils puissent coulisser le long d'au moins une troisième direction (D3) qui est sensiblement parallèle à ladite deuxième direction (D2) au moins pour le positionnement desdits seconds moyens de serrage (14) par rapport à ladite seconde partie de profilé (S2) dans la configuration d'entrée au niveau des crêtes externes correspondantes (N'), lesdits seconds moyens de déplacement (18) comprenant des cinquièmes moyens (35) d'actionnement avec un mouvement de translation alterné desdits seconds moyens de serrage (14) le long de la troisième direction (D3).

14. Unité (1) selon la revendication 13, **caractérisée en ce que** lesdits seconds moyens de serrage (14) fonctionnent le long de ladite troisième direction (D3) sur au moins deux niveaux qui correspondent auxdites secondes positions de serrage et de desserrage, dans la seconde position de serrage les seconds moyens de serrage (14) étant agencés sur un plan qui coupe les crêtes extérieures (N') de la seconde partie de profilé (S2) dans la configuration d'entrée.

15. Appareil (100) permettant d'assembler des profilés d'isolation thermique (P), **caractérisé en ce qu'**il comprend une unité de pré-assemblage (1) selon une ou plusieurs des revendications précédentes, ayant lesdites premières et secondes régions d'entrée (2, 3) associées avec la sortie, respectivement, d'une première machine-outil (101) et d'une seconde machine-outil (102) permettant d'usiner ladite au moins une fente longitudinale (C), respectivement, desdites première et seconde parties de profilé (S1, S2) et ladite région de travail (8) associée à l'alimentation de moyens (103) permettant la déformation plastique des crêtes externes (N') dudit profilé pré-assemblé (P').

16. Procédé pour le pré-assemblage des profilés d'isolation thermique (P) comprenant les étapes consistant à
- fournir une première partie de profilé (S1) dotée d'au moins une fente longitudinale (C) qui est délimitée par une paire de crêtes mutuellement opposées (N) et est agencée dans la configuration d'entrée avec ladite au moins une fente (C) dirigée vers le haut ;
- fournir une seconde partie de profilé (S2) dotée d'au moins une fente longitudinale (C) qui est délimitée par une paire de crêtes mutuellement opposées (N) et est agencée dans la configuration d'entrée avec ladite au moins une fente (C) dirigée vers le haut ;
- fournir au moins une cloison (B) permettant de raccorder lesdites première et seconde parties de profilé (S1, S2) ;
- déplacer lesdites première et seconde parties de profilé (S1, S2) depuis les configurations d'entrée respectives vers une configuration de pré-assemblage dans laquelle lesdites parties de profilé sont agencées adjacentes aux fentes correspondantes (C) en paires se faisant face, afin de former au moins un réceptacle pour ladite cloison de raccordement (B), la seconde partie de profilé (S2) étant tournée sur 180 ° par rapport à son propre axe longitudinal afin d'agencer la fente (C) correspondante dirigée vers le bars ;
- insérer ladite cloison de raccordement (B) le long de ladite assiette,
**caractérisé en ce que** ledit déplacement comprend le serrage desdites première et seconde parties de profilé (S1, S2) au niveau des crêtes externes correspondantes (N').
